# EUROPEAN PATENT SPECIFICATION

(11) **EP 3 928 958 B1**
(45) Date of publication and mention of the grant of the patent: **13.12.2023**
(21) Application number: 21180360.6
(22) Date of filing: 18.06.2021
(51) Int. Cl.: B29C 65/02, B29C 65/74, B65B 9/20, B65B 19/34, B65B 51/30, B29C 65/18

(54) **WELDING AND CUTTING DEVICE FOR CONTINUOUS PACKAGING OF FOOD PRODUCTS INSERTED INTO A CONTINUOUS TUBULAR CASING ADVANCING ALONG A CONVEYING PATH**
SCHWEISS- UND SCHNEIDVORRICHTUNG ZUM KONTINUIERLICHEN VERPACKEN VON LEBENSMITTELPRODUKTEN, DIE IN EINE KONTINUIERLICHE, SCHLAUCHFÖRMIGE UMHÜLLUNG EINGEFÜHRT WERDEN, DIE SICH ENTLANG EINER FÖRDERSTRECKE BEWEGT
DISPOSITIF DE SOUDAGE ET DE COUPE POUR L'EMBALLAGE CONTINU DE PRODUITS ALIMENTAIRES INTRODUITS DANS UNE ENVELOPPE TUBULAIRE CONTINUE AVANCANT LE LONG D'UN CHEMIN DE CONVOYAGE

(30) Priority: 26.06.2020 IT 202000015439
(43) Date of publication of application: 29.12.2021
(73) Proprietor: Pavan S.p.A., 35015 Galliera Veneta (PD) (IT)
(72) Inventor: MARINI, Roberto, 51031 Agliana (PRATO) (IT)
(74) Representative: Dondi, Silvia

(56) References cited:
- WO-A1-2006/087273
- WO-A2-2010/064093
- IT-A1- PI20 060 062

## Description

The present invention relates to a welding and cutting device for continuous packaging of food products inserted into a continuous tubular casing advancing along a conveying path.

The reference sector for the present invention is the packaging of food products. In particular, the present invention is applied in the packaging of long pasta, such as *spaghetti, bavette, bucatini,* etc. or in packaging loose products with a low specific weight, such as breakfast cereals, snacks, crisps, etc.

As is known, the operation of packing a set of food products in a casing, for example spaghetti, is achieved with automatic machines that are able to insert a set quantity in weight of pasta into the casing and subsequently close the casing, for example by heat sealing, forming a sequence of separate packs that are supplied leaving the machine in rapid succession. In particular, continuous supply machines exist provided with a conveyor belt that weld repeatedly, at a preset rate, the longitudinal ends of the packs and sometimes separate the successive packs.

Some of these machines have the problem of being unable to ensure that all the products of the group are in the correct position at the moment of welding, so that sometimes some of them stop in an intermediate position between two successive packs, causing so-called "pinching" i.e. defective closure and thus a product that cannot be conserved correctly and thus marketed.

In known machines, if the elements that accidentally stop in the aforesaid intermediate position are only a few units, these elements may be broken by the action of spreading apart sheets that reach the product from opposite sides in a welding zone, brought together to form a wedge, so that the elements can be moved away from the welding zone by the spreading apart of the sheets, thus clearing the welding zone and permitting correct welding.

In this regard, document WO2010064093 shows a device for packaging food products that is adapted to obtain a packaging of groups of objects inside a continuous tubular casing. This device has two pairs of spreading apart sheets, as described above. In particular, the spreading apart or bringing together movement of each sheet with respect to the other occurs by sliding two appropriate active elements on two fixed cams. In particular, the spreading apart movement of the first sheet is due to sliding of the first active element on the first cam; the spreading apart movement of the second sheet is due to sliding of the second active element on the second cam. The contact between the active element and the respective fixed cam occurs only for a part of the cycle performed by the pair of sheets. It is therefore necessary to use a damping device that acts when the second active element separates from the second fixed cam to avoid sudden closure of the sheets that would cause noise knocking against one another. Nevertheless, owing to the high number of actuations required during operation of the machine, the damping device quickly loses efficacy and it is necessary to replace it within an interval of time that is significantly shorter than for the other components of the device.

Further, during the machine maintenance, startup, test and size change steps (and sometimes also during the production step), the presence of the sheets can be a drawback and it is thus necessary to override the sheets. In this known solution, the device can be overridden only by an intervention by a maintenance worker, with a resulting production shutdown. In fact, the maintenance worker has to act on adjusting screws, i.e. on a mechanical component of the device.

Document WO2006/087273 describes a sealing and transversal cutting device for packaging machines of loose elongated material in motion along a horizontal plane, comprising a pair of pincers connected to mechanisms comprising front preflattening plates and rear preflattening plates moved into predefined positions by springs that react to an almost circular preset path that brings the two pincers into contact one above the other, so that said plates separate the loose elongated material which is upstream of from that which is downstream of the device and carry out a preflattening of the film.

Document ITPI20060062 shows a heat-sealing device for continuous packaging of food products inserted into a continuous tubular casing, comprising a pair of sheets capable of moving in cyclic motion between a closed position in which they form a wedge, and an open position in which they are spread apart to allow the passage of a sealing element and at the same time keep the objects separated from the sealing element. The passage between the two positions is by means of fixed guides.

In this context, the technical task underpinning the present invention is to propose a welding and cutting device for continuous packaging of food products inserted into a continuous tubular casing advancing along a conveying path, that overcomes the aforesaid prior-art drawbacks.

In particular, the object of the present invention is to propose a welding and cutting device for continuous packaging of food products inserted into a continuous tubular casing advancing along a conveying path that is simpler structurally and more reliable over the long term than prior art solutions.

Another object of the present invention is to propose a welding and cutting device for continuous packaging of food products inserted into a continuous tubular casing advancing along a conveying path, which permits overriding by a maintenance worker without shutting down production.

The stated technical task and specified aims are substantially achieved by a welding and cutting device for continuous packaging of food products inserted into a continuous tubular casing advancing along a conveying path, comprising:
- a welding and cutting station through which the tubular casing slides;
- a welding and cutting member that is movable towards and away from the welding and cutting station so as to weld and cut said tubular casing at predefined welding and cutting zones;
- at least one pair of sheets that are movable at least between a wedge position, wherein two corresponding ends of said sheets are at a minimum distance from one another, and a spread apart position,
wherein said two ends are at a maximum distance from one another, characterised in that said welding and cutting device comprises a cam rotating around a rotation axis, said cam being operationally active on said sheets to take the sheets from the wedge position to the spread apart position and vice versa.

In accordance with one embodiment, the cam is characterised by having a profile that is such as to move the pair of sheets towards/away from the welding and cutting station.

In accordance with one embodiment, the welding and cutting device comprises:
- a first shaped arm operationally connected to the cam to which one of the two sheets is integrally constrained;
- a second shaped arm to which the other sheet is integrally constrained;
- a connecting bar between the first shaped arm and the second shaped arm.

In accordance with one embodiment, the welding and cutting device comprises translating alternatively in a direction of translation that is substantially parallel to the conveying path and connected to the sheets.

In accordance with one embodiment, the welding and cutting device comprises a jaw hinged on the slide, said first and second shaped arm being rotatably fitted on the jaw.

In accordance with one embodiment, the welding and cutting device comprises a compression spring having two ends respectively connected to the first shaped arm and to the jaw so as to ensure continuous transmission of the motion from the cam to the first shaped arm.

In accordance with one embodiment, the welding and cutting device comprises support means for supporting the welding and cutting member that comprises:
- a support for the welding and cutting member connected to the slide and constrained to move along a closed trajectory;
- a fork rotating around a rotation axis and connected to the welding and cutting member to give the welding and cutting member a rotary motion.

In accordance with one embodiment, the welding and cutting device comprises a jaw hinged on the slide, said support being an end of the jaw. In accordance with one embodiment, the rotation axis of the fork and the rotation axis of the cam are parallel. In accordance with one embodiment, the welding and cutting device comprises a locking system for locking the pair of sheets, comprising:
- a hook-shaped element that is movable between an operating position, wherein the hook-shaped element engages a protrusion of the first shaped arm so as to lock the sheets in the second spread apart position, and a disengaged position;
- a pneumatic actuator for moving said element between the two positions.

Further characteristics and advantages of the present invention will more fully emerge from the indicative, and thus non-limiting, description of a preferred, but not exclusive, embodiment of a cutting and welding device for continuous packaging of food products inserted into a continuous tubular casing advancing along a conveying path, as illustrated in the accompanying drawings, in which:
- figures 1 to 4 illustrate in succession different operating steps of a welding and cutting device for continuous packaging of food products inserted into a continuous tubular casing advancing along a conveying path, according to the present invention, in a frontal view;

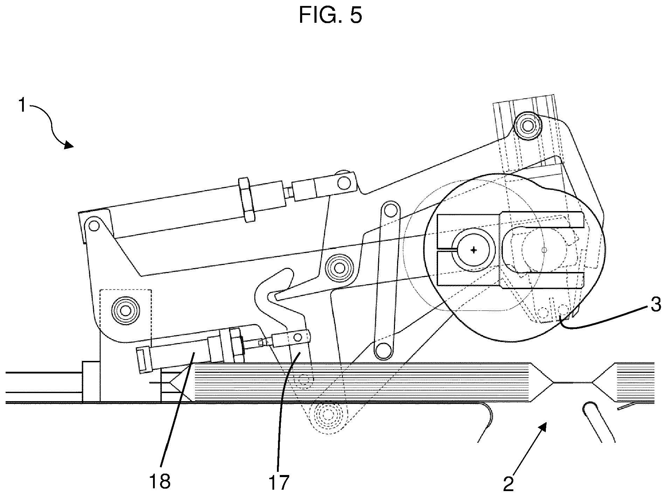

- figure 5 illustrates a configuration overriding the device of figure 1;
With reference to the figures, a cutting and welding device for continuous packaging of food products, such as for example long pasta, inserted into a continuous tubular casing 100, is indicated by the number 1. The tubular casing 100 is made from a film welded longitudinally. In particular, the tubular casing 100 slides on a conveyor along a conveying path with the food products inside in succession and spaced apart from one another by a set interspace so as to define welding and cutting zones 101 of the tubular casing 100.

For example, the tubular casing 100 is made of recyclable material and only the zones intended to be welded are made of heat-sealable material. Alternatively, the tubular casing 100 is made of plastic material.

In accordance with one embodiment, illustrated in the figures, the conveying path is substantially horizontal, according to the arrow A. Usually, this path is used to make long pasta and in the industry it is known as "Horizontal Form, Fill and Seal" (HFFS).

In accordance with an alternative embodiment (which is not illustrated), the conveying path is substantially vertical. Usually, this path is used to package loose products with a low specific weight and in the industry it is known as "Vertical Form, Fill and Seal" (VFFS).

The device 1 comprises a welding and cutting station 2 through which the tubular casing 100 flows. In the welding and cutting station 2, the tubular casing 100 is welded and cut at the welding and cutting zones 101. In particular, the tubular casing 100 advances along the conveying path. This means that a plurality of welding and cutting zones 101 cross in succession the welding and cutting station 2, being so welded and cut as to form a sequence of closed tubular packs 102 each containing a respective group of products, for example spaghetti.

The device 1 comprises a welding and cutting member 3 that is movable towards and away from the welding and cutting station 2 so as to weld and cut the tubular casing 100 at the welding and cutting zones 101. In particular, the welding and cutting member 3 is suitable for melting a portion of the casing 100 at the welding and cutting zone 101 so as to weld the casing 100 and perform the cut.

The device 1 comprises at least one pair of sheets 4, 5 that are movable at least between a wedge position, wherein two corresponding ends 4a, 5a of said sheets 4,5 are at a minimum distance from one another, and a spread apart position, wherein said two ends 4a, 5a are at a maximum distance from one another.

Originally, also a cam 6 rotating around a rotation axis is present. The cam 6 is operationally active on the sheets 4, 5 to take them from the first wedge position to the second spread apart position and vice versa.

The spreading apart movement for spreading apart the sheets 4, 5 is particularly advantageous as it enables the products to be removed from the welding and cutting zones 101.

Preferably, the cam 6 is characterised by having a profile that is such as to move the pair of sheets 4, 5 towards/away from the welding and cutting station 2.

Preferably, the device 1 comprises a slide 7 translating alternatively in a translation direction that is substantially parallel to the conveying path. Appropriately, the cam 6 is characterized by having a profile that is such as to permit the pair of sheets 4, 5 a translational motion.

The slide 7 is so connected to the sheets 4, 5 that:
- when the slide 7 moves in accordance with the conveying path, the sheets 4, 5 move together to the welding and cutting zone 101;
- when the slide 7 moves in the opposite direction to the conveying path, the sheets 4, 5 return to the original position thereof.

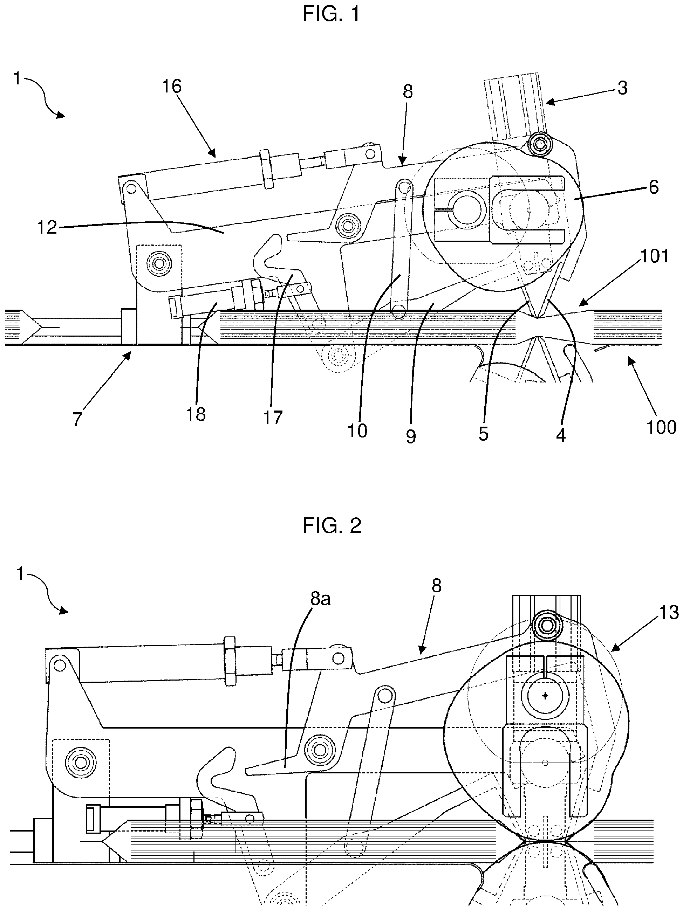

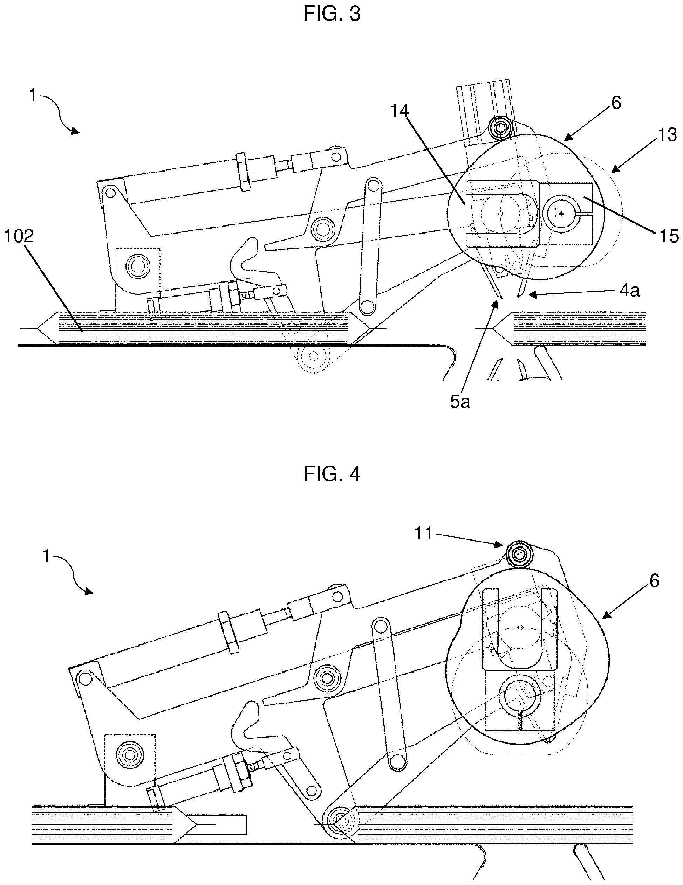

The pair of sheets 4, 5 thus performs a cycle according to what is described below, as illustrated in figures 1 to 4. Consider that the pair of sheets 4, 5 is in the wedge position at a first welding and cutting zone 101. This configuration can be identified as an initial condition. The sheets 4, 5 move to the spread apart position, such as to free the welding and cutting zone 101 from possible products. After which, the sheets 4,5 that are still spread apart perform a translation along a predetermined section of the conveying path together to the welding and cutting zone 101. At the end of the predetermined section, the pair of sheets 4, 5 abandons the first welding and cutting zone 101, and thus the tubular casing 100, performing a motion in the opposite direction to that of the conveying path. During this translational motion, the pair of sheets 4, 5 performs a motion moving away from the conveying path, followed by a motion approaching the conveying path. The combination of the moving away/approach motion with the translational motion in the direction opposite the conveying path generates an opening/closing movement relative to the tubular casing 100. Owing to the combination of these movements, the pair of sheets 4, 5 is again in the initial condition, at a second welding and cutting zone 101, subsequent to the first one, to start a new cycle.

In the embodiment described and illustrated herein, the device 1 comprises:
- a first shaped arm 8 operationally connected to the cam 6 to which one of the two sheets 4, 5 is integrally fitted;
- a second shaped arm 9 to which the other sheet 4, 5 is integrally fitted;
- a connecting bar 10 between the first shaped arm 8 and the second shaped arm 9.

Preferably, the cutting bar 10 is of fixed length.

Preferably, the device 1 comprises an active element 11 arranged on the first shaped arm 8 and associated with the cam 6 to transfer the motion from the cam 6 to the first shaped arm 8.

In the embodiment disclosed and illustrated here, the device 1 comprises a jaw 12 hinged on the slide 7. The first and second shaped arm 8,9 are rotatably mounted on the jaw 12.

Preferably, the device 1 comprises support means of the welding and cutting member 3 that is such as to constrain the device 1 to move along a closed trajectory 13.

The support means comprises:
- a support 14 for the welding and cutting member 3 connected to the slide 7 and constrained to move along the closed trajectory 13;
- a fork 15 rotating around a rotation axis and connected to the welding and cutting member 3 to give the welding and cutting member 3 rotary motion.

Preferably, the support 14 is an end of the jaw 12. In other words, the support 14 defines an extension of the jaw 12.

In particular, the closed trajectory 13 comprises a circumference segment and a rectilinear segment that is substantially parallel to the conveying path. Preferably, this closed trajectory 13 is obtained by a sliding coupling means comprising a fixed guide having the shape of the closed trajectory and an engagement element that is slidable along the fixed guide and is integral with the support 14.

The welding and cutting member 3 accordingly moves according to the closed trajectory 13. In particular, the welding and cutting member 3 contacts the tubular casing 100 at the welding and cutting zone 101 when the sheets 4, 5 are in the spread apart position and translates together with the tubular casing 100 along the predetermined section so as to perform welding and transverse cutting of the tubular casing 100. Preferably, the rotation axis of the fork 15 is substantially parallel to the rotation axis of the cam 6. More preferably, the rotation axis of the fork 15 substantially coincides with the rotation axis of the cam 6.

Preferably, the device 1 comprises a compression spring 16 having two ends respectively connected to the first shaped arm 8 and to the jaw 12 so as to ensure continuous transmission of the motion from the cam 6 to the first shaped arm 8. In other words, the compression spring 16 ensures continuous contact between the active element 11 and the cam 6. Preferably, the device 1 comprises a locking system for locking the pair of sheets 4, 5. This locking system comprises:
- a hook-shaped element 17 that is movable between an operating position, wherein the hook-shaped element 17 engages a protrusion 8a of the first shaped arm 8 so as to lock the sheets 4,5 in the second spread apart position, and a disengaged position;
- a pneumatic actuator 18 for moving the element 17 between the two positions.

Advantageously, the pneumatic actuator 18 is controlled by a solenoid valve. In this manner, the locking system is triggerable from the exterior, without carrying out a machine shutdown.

Preferably, the locking system configures the device 1 in an overriding position, wherein the sheets 4, 5 are in a distanced position from the positions adopted during operation in an operating condition of the device 1.

In particular, in the overriding position, the active element 11 is not in contact with the cam 6, so transmission of the motion from the cam 6 to the first shaped arm 8 is interrupted.

Preferably, the first shaped arm 8 extends at least partially around the cam 6. With respect to the active element 11 that is in contact with the cam 6, the end to which the sheet 4, 5 is connected is on one side whereas the connection with the cutting bar 10, the hinging point with the jaw 12 and the protuberance 8a are on the other side.

Preferably, the connection with the cutting bar 12 is interposed between the active element 8 and the hinging point.

In particular, the device 1 is symmetrical to the conveying path, thus defining an upper component and a lower component. What has been disclosed so far must be taken to refer to one of the two components, for example the upper component. The lower component is substantially specular to the upper component with respect to the conveying path. Preferably, the slide 7 is shared and the cams 6 of the two components rotate synchronised so that the upper component and the lower component act simultaneously on the same welding and cutting zone 101 from two opposite sides.

From the description given, the features of the cutting and welding device for continuous packaging of food products inserted into a continuous tubular casing advancing along a conveying path, according to the present invention, are clear, as are the advantages.

In particular, using one single rotating cam in place of two fixed cams for a pair of sheets significantly simplifies the device.

Further, by introducing the rotating cam, the adjustment of the relative distance between the two shaped arms (which in the prior art occurred via a connecting bar with an adjustable length), is no longer necessary. Accordingly, a fixed length cutting bar is used, simplifying the device and decreasing the risks of breakage or wear.

Further, as the contact between the active element and cam is not maintained for the entire cycle of the device, the damping device of the known solutions is no longer necessary.

Further, owing to the described locking system, the shaped arms and consequently the pair of sheets are in an overriding position far from the tubular casing. Maintenance, startup and size change tasks can thus be performed without necessarily shutting down production entirely.

## Claims

1. A welding and cutting device (1) for continuous packaging of food products inserted into a continuous tubular casing (100) advancing along a conveying path, comprising:
- a welding and cutting station (2) through which the tubular casing (100) slides;
- a welding and cutting member (3) that is movable towards and away from the welding and cutting station (2) so as to weld and cut said tubular casing (100) at predefined welding and cutting zones (101);
- at least one pair of sheets (4, 5) that are movable at least between a wedge position, wherein two corresponding ends (4a, 5a) of said sheets (4,5) are at a minimum distance from one another, and a spread apart position, wherein said two ends (4a, 5a) are at a maximum distance from one another,
**characterised in that** said welding and cutting device (1) comprises a cam (6) rotating around a rotation axis, said cam (6) being operationally active on said sheets (4, 5) to take the sheets (4, 5) from the wedge position to the spread apart position and vice versa.

2. The device (1) according to claim 1, wherein said cam (6) is **characterised by** having a profile that is such as to move the pair of sheets (4, 5) towards/away from the welding and cutting station (2).

3. The device (1) according to any one of the preceding claims, comprising:
- a first shaped arm (8) operationally connected to the cam (6) to which one of the two sheets (4, 5) is integrally fitted;
- a second shaped arm (9) to which the other sheet (4,5) is integrally fitted;
- a connecting bar (10) between the first shaped arm (8) and the second shaped arm (9).

4. The device (1) according to claim 3, comprising a slide (7) translating alternatively in a translation direction that is substantially parallel to said conveying path and connected to said sheets (4, 5).

5. The device (1) according to claim 4, comprising a jaw (12) hinged on the slide (7), said first and second shaped arm (8, 9) being rotatably fitted to said jaw (12).

6. The device (1) according to claim 5, comprising a compression spring (16) having two ends respectively connected to the first shaped arm (8) and to the jaw (12) so as to ensure continuous transmission of the motion from the cam (6) to the first shaped arm (8).

7. The device (1) according to any one of claims 4 to 6, comprising support means for supporting the welding and cutting member (3) comprising:
- a support (14) for the welding and cutting member (3) connected to the slide (7) and constrained to move along a closed trajectory (13);
- a fork (15) rotating around a rotation axis and connected to the welding and cutting member (3) to give the welding and cutting member (3) a rotary motion.

8. The device (1) according to claim 7, comprising a jaw (12) hinged on the slide (7), said support (14) being an end of the jaw (12).

9. The device (1) according to claim 7 or 8, wherein the rotation axis of the fork (15) and the rotation axis of the cam (6) are parallel.

10. The device (1) according to any one of the preceding claims, comprising a locking system (17,18) for locking the pair of sheets (4,5), comprising:
- a hook-shaped element (17) that is movable between an operating position, wherein the hook-shaped element (17) engages a protrusion (1 0b) of the first shaped arm (10) so as to lock the sheets (4,5) in the second spread apart position, and a disengagement position;
a pneumatic actuator (18) for moving said element (17) between the two positions.

## Patentansprüche

1. Schweiß- und Schneidvorrichtung (1) zum kontinuierlichen Verpacken von Lebensmittelprodukten, die in eine kontinuierliche schlauchförmige Umhüllung (100) eingeführt werden, die sich entlang einer Förderstrecke bewegt, umfassend:
- eine Schweiß- und Schneidstation (2), durch die die schlauchförmige Umhüllung (100) gleitet,
- ein Schweiß- und Schneidelement (3), das zur Schweiß- und Schneidstation (2) hin und von dieser weg derart bewegbar ist, um die schlauchförmige Umhüllung (100) an vordefinierten Schweiß- und Schneidzonen (101) zu schweißen und zu schneiden,
- mindestens ein Paar Bleche (4, 5), die mindestens zwischen einer Keilposition, in der zwei entsprechende Enden (4a, 5a) der Bleche (4,5) in einem Mindestabstand voneinander sind, und einer auseinander gespreizten Position bewegbar sind, in der die zwei Enden (4a, 5a) in einem Maximalabstand voneinander sind,
**dadurch gekennzeichnet, dass** die Schweiß- und Schneidvorrichtung (1) einen Nocken (6) aufweist, der sich um eine Drehachse dreht, wobei der Nocken (6) betriebswirksam auf die Bleche (4, 5) wirkt, um die Bleche (4, 5) von der Keilposition in die auseinander gespreizte Position und umgekehrt zu nehmen.

2. Vorrichtung (1) nach Anspruch 1, wobei der Nocken (6) **dadurch gekennzeichnet ist, dass** er ein Profil aufweist, das derart ist, um das Paar Bleche (4, 5) zur Schweiß- und Schneidestation (2) hin/von dieser weg zu bewegen.

3. Vorrichtung (1) nach einem der vorhergehenden Ansprüche, umfassend:
- einen ersten geformten Arm (8), der betriebswirksam mit dem Nocken (6) verbunden ist, an dem eines der zwei Bleche (4, 5) einstückig angebracht ist,
- einen zweiten geformten Arm (9), an dem das andere Blech (4,5) einstückig angebracht ist,
- eine Verbindungsstange (10) zwischen dem ersten geformten Arm (8) und dem zweiten geformten Arm (9).

4. Vorrichtung (1) nach Anspruch 3, umfassend einen Schlitten (7), der sich abwechselnd in einer Verschiebungsrichtung, die im Wesentlichen parallel zu der Förderstrecke ist, verschiebt und mit den Blechen (4, 5) verbunden ist.

5. Vorrichtung (1) nach Anspruch 4, umfassend eine Backe (12), die an dem Schlitten (7) angelenkt ist, wobei der erste und der zweite geformte Arm (8, 9) drehbar an der Backe (12) angebracht sind.

6. Vorrichtung (1) nach Anspruch 5, umfassend eine Druckfeder (16), die zwei Enden aufweist, die jeweils mit dem ersten geformten Arm (8) und der Backe (12) derart verbunden sind, um eine kontinuierliche Übertragung der Bewegung von dem Nocken (6) zu dem ersten geformten Arm (8) zu gewährleisten.

7. Vorrichtung (1) nach einem der Ansprüche 4 bis 6, umfassend Stützmittel zum Stützen des Schweiß- und Schneidelements (3), umfassend:
- eine Stütze (14) für das Schweiß- und Schneidelement (3), die mit dem Schlitten (7) verbunden ist und gezwungen ist, sich entlang einer geschlossenen Bahn (13) zu bewegen,
- eine Gabel (15), die sich um eine Drehachse dreht und mit dem Schweiß- und Schneidelement (3) verbunden ist, um dem Schweiß- und Schneidelement (3) eine Drehbewegung zu verleihen.

8. Vorrichtung (1) nach Anspruch 7, umfassend eine Backe (12), die an dem Schlitten (7) angelenkt ist, wobei die Stütze (14) ein Ende der Backe (12) ist.

9. Vorrichtung (1) nach Anspruch 7 oder 8, wobei die Drehachse der Gabel (15) und die Drehachse des Nockens (6) parallel sind.

10. Vorrichtung (1) nach einem der vorhergehenden Ansprüche, umfassend ein Verriegelungssystem (17, 18) zum Verriegeln des Paares Bleche (4,5), umfassend:
- ein hakenförmiges Element (17), das zwischen einer Betriebsposition, in der das hakenförmige Element (17) in einen Vorsprung (10b) des ersten geformten Arms (10) derart eingreift, um die Bleche (4,5) in der zweiten auseinander gespreizten Position zu verriegeln, und einer Löseposition bewegbar ist,
einen pneumatischen Aktuator (18) zum Bewegen des Elements (17) zwischen den zwei Positionen.

## Revendications

1. Dispositif de soudage et de coupe (1) pour l'emballage continu de produits alimentaires introduits dans une enveloppe tubulaire continue (100) avançant le long d'un chemin de convoyage, comprenant :
- un poste de soudage et de coupe (2) à travers lequel coulisse l'enveloppe tubulaire (100) ;
- un élément de soudage et de coupe (3) qui peut se rapprocher et s'éloigner du poste de soudage et de coupe (2) de manière à souder et à couper ladite enveloppe tubulaire (100) au niveau de zones de soudage et de coupe prédéfinies (101) ;
- au moins une paire de feuilles (4, 5) qui sont mobiles au moins entre une position de coin, dans laquelle deux extrémités correspondantes (4a, 5a) desdites feuilles (4, 5) sont à une distance minimale l'une de l'autre, et une position écartée, dans laquelle lesdites deux extrémités (4a, 5a) sont à une distance maximale l'une de l'autre,
**caractérisé en ce que** ledit dispositif de soudage et de coupe (1) comprend une came (6) tournant autour d'un axe de rotation, ladite came (6) étant opérationnellement active sur lesdites feuilles (4, 5) pour amener les feuilles (4, 5) de la position de coin à la position écartée et vice versa.

2. Dispositif (1) selon la revendication 1, dans lequel ladite came (6) est **caractérisée en ce qu'**elle a un profil qui est tel qu'il déplace la paire de feuilles (4, 5) vers/depuis le poste de soudage et de coupe (2).

3. Dispositif (1) selon l'une quelconque des revendications précédentes, comprenant :
- un premier bras profilé (8) opérationnellement relié à la came (6) à laquelle l'une des deux feuilles (4, 5) est intégralement fixée ;
- un second bras profilé (9) auquel l'autre feuille (4, 5) est intégralement fixée ;
- une barre de liaison (10) entre le premier bras profilé (8) et le second bras profilé (9).

4. Dispositif (1) selon la revendication 3, comprenant une glissière (7) se déplaçant alternativement dans une direction de translation qui est sensiblement parallèle audit chemin de convoyage et reliée auxdites feuilles (4, 5).

5. Dispositif (1) selon la revendication 4, comprenant une mâchoire (12) fixée pivotante sur la glissière (7), lesdits premier et second bras profilés (8, 9) étant montés en rotation sur ladite mâchoire (12).

6. Dispositif (1) selon la revendication 5, comprenant un ressort de compression (16) ayant deux extrémités respectivement reliées au premier bras profilé (8) et à la mâchoire (12) de manière à assurer une transmission continue du mouvement de la came (6) au premier bras profilé (8).

7. Dispositif (1) selon l'une quelconque des revendications 4 à 6, comprenant des moyens de support pour supporter l'élément de soudage et de coupe (3) comprenant :
- un support (14) pour l'élément de soudage et de coupe (3) relié à la glissière (7) et contraint de se déplacer le long d'une trajectoire fermée (13) ;
- une fourche (15) tournant autour d'un axe de rotation et reliée à l'élément de soudage et de coupe (3) pour donner à l'élément de soudage et de coupe (3) un mouvement rotatif.

8. Dispositif (1) selon la revendication 7, comprenant une mâchoire (12) fixée articulée sur la glissière (7), ledit support (14) étant une extrémité de la mâchoire (12).

9. Dispositif (1) selon la revendication 7 ou 8, dans lequel l'axe de rotation de la fourche (15) et l'axe de rotation de la came (6) sont parallèles.

10. Dispositif (1) selon l'une quelconque des revendications précédentes, comprenant un système de verrouillage (17, 18) pour verrouiller la paire de feuilles (4, 5), comprenant :
- un élément en forme de crochet (17) qui est mobile entre une position de fonctionnement, dans laquelle l'élément en forme de crochet (17) se met en prise avec une saillie (10b) du premier bras profilé (10) de manière à verrouiller les feuilles (4, 5) dans la seconde position écartée, et une position de dégagement ;
un actionneur pneumatique (18) pour déplacer ledit élément (17) entre les deux positions.
